# EUROPEAN PATENT SPECIFICATION

(11) **EP 2 640 941 B1**
(45) Date of publication and mention of the grant of the patent: **29.03.2017**
(21) Application number: 11842203.9
(22) Date of filing: 08.11.2011
(51) Int. Cl.: F01N 3/022, B01D 46/24, B01D 46/00, B01D 46/10, F01N 3/023, F01N 3/035, F01N 13/00

(54) **PARTICLE FILTER FOR AN EXHAUST SYSTEM OF A COMBUSTION ENGINE**
PARTIKELFILTER FÜR EIN ABGASSYSTEM EINES VERBRENNUNGSMOTORS
FILTRE À PARTICULES POUR UN SYSTÈME D'ÉCHAPPEMENT D'UN MOTEUR À COMBUSTION

(30) Priority: 16.11.2010 SE 1051199
(43) Date of publication of application: 25.09.2013
(73) Proprietor: Scania CV AB, 151 87 Södertälje (SE)
(72) Inventor: TRÄFF, Johan, S-151 39 Södertälje (SE)
(74) Representative: Scania CV AB
(86) International application number: PCT/SE2011/051329
(87) International publication number: WO 2012/067567

(56) References cited:
- EP-A1- 1 450 015
- WO-A1-03/068363
- WO-A1-2009/127298
- WO-A2-2004/078305
- DE-C1- 4 033 621
- DE-C1- 4 033 621
- JP-A- 2007 182 896
- JP-A- 2009 133 221
- US-A- 4 346 557
- US-A1- 2003 097 834
- US-A1- 2006 191 246
- US-A1- 2009 056 546
- US-A1- 2009 120 081

## Description

### BACKGROUND TO THE INVENTION AND PRIOR ART

The invention relates to a particle filter for an exhaust system of a combustion engine according to the preamble of claim 1.

In exhaust systems of vehicles powered by diesel engines, particle filters are used to remove particles from the exhaust gases. A particle filter may comprise a material body made of a porous material and provided with elongate ducts which extend in parallel between two ends of the material body. The ducts comprise inlet ducts which have apertures to receive exhaust gases led into the filter body, and outlet ducts which have apertures for exhaust gases led out from the filter body. The inlet ducts and outlet ducts are separated by sidewalls formed of the porous material. The porous sidewalls contain axial passages of such a size that they allow exhaust gases but not particles to pass through. The particles therefore become attached mainly to the internal surfaces of the inlet ducts close to the passages when the exhaust gases are led from the inlet ducts to the outlet ducts.

Particle filters have to be regenerated at relatively frequent intervals to prevent them from becoming blocked by particles during operation. This is achieved by burning of the soot in the particles. The soot bums at times when the exhaust gases are at a high enough temperature. To make more frequent burning possible, chemical substances may be added to the fuel to lower the temperature at which the soot bums. Alternatively, an oxidation catalyst may be provided upstream of the particle filter in the exhaust line. The oxidation catalyst converts nitrogen monoxide in the exhaust gases to nitrogen dioxide. The presence of nitrogen dioxide in the exhaust gases also lowers the temperature at which the soot bums.

Not all of the materials in the particles are combustible, e.g. metals. This leads over time to formations of ash which obstruct the axial passages in the sidewalls between the outlet ducts and the inlet ducts. An ash formation also occurs at the closed end surface of the inlet ducts. The particle filter has therefore to be cleaned of ash at appropriate intervals to prevent impairment of its function. As the outlet ducts have a closed end, it is difficult to reach and detach the ash which becomes attached to their internal surfaces. The cleaning process results in wear of the relatively expensive particle filters.

US 2009/0293716 refers to a device and a method which make it possible to clean simultaneously a plurality of particle filters of the abovementioned kind.

WO 03/068363 discloses a multi-stage treatment zone for combustion gases containing at least one flow-through monolith section and one filter screen section.

EP 1 450 015 discloses a first honeycomb filter with through channels, wherein specified through channels are plugged at its end face, which is facing a second downstream honeycomb filter.

### SUMMARY OF THE INVENTION

The object of the present invention is to propose a particle filter which can be cleaned easily but relatively infrequently.

The above objects are achieved with the particle filter mentioned in the introduction which is characterised by what is indicated in the characterising part of claim 1. The particle filter thus comprises a first filter component and a second filter component. The first filter component comprises at least one first duct and one second duct which have outlet apertures close to the second filter component. This makes it possible for the exhaust gases to be led along two different flow paths in the first filter component to the second filter component. A first flow path leads the exhaust gases unfiltered through the first filter component, after which the particles in the exhaust gases are separated in the downstream second filter component. A second flow path separates the particles in the exhaust gases in the first filter component when the exhaust gases are led from the first duct to the second duct via the passages in the wall element. In this case, exhaust gases which have thus already been cleaned of particles are led through the second filter component. During operation, the exhaust gases take whichever of the two flow paths presents the lower possible flow resistance. The total flow resistance of the first flow path is mainly determined by the flow resistance when the exhaust gases are led through the second filter component. The total flow resistance of the second flow path is determined mainly by the aggregate of the flow resistance when the exhaust gases are led from the first duct to the second duct and the flow resistance when they are led through the second filter component.

In operating situations where the second filter component is new, exhaust gases led along the first flow path and the second flow path are subject to similar flow resistance when they are led through the second filter component. The exhaust gases led along the second flow path are additionally subject to a flow resistance in the first filter component. When the second filter component is new, the flow resistance along the first flow path is thus definitely less than the flow resistance along the second flow path. In this situation the exhaust gases are therefore led mainly along the first flow path. The particles in the exhaust gases are thus captured in the second filter component in a region close to the outlet aperture of the first duct. Over time, ash from burnt particles accumulates in this region of the second filter component. The ash obstructs the passages through the second filter component in this region. The flow resistance for the exhaust gases led along the first flow path increases. Over time, the exhaust flow will therefore switch from the first flow path to the second flow path. When this happens, the first filter component becomes responsible for the main separation of particles from the exhaust gases. After a further period of use, the first filter component will likewise begin to be obstructed by ash. The filter components of the particle filter will then need to be replaced or renovated. As the particle filter will work so long as either of said filter components works, replacement or renovation of the filter may take place at quite long intervals. The first filter component thus has a first duct which is open at both ends. This means that ash which has become attached to the surface in the first duct can be blown out in a relatively uncomplicated way and with little wear of the first filter component.

According to a preferred embodiment of the invention, the particle filter comprises fastening means by which the second filter component can be fitted releasably at said location. This makes it quite easy to fit and remove the second filter component, and with advantage also the first filter component, when replacement or renovation becomes necessary. The second filter component comprises with advantage a mat of fibre material. The fibres are here arranged to form passages so dimensioned that exhaust gases, but not particles, can be led through the mat. The fibre mat may comprise fibres of silicon dioxide. It may alternatively comprise fibres of other heat-tolerant materials. Said fibre mat may be coated with a material which results in oxidation catalysis involving the formation of nitrogen dioxide in at least the regions where the particles accumulate. Such a coating may be a thin external layer of a noble metal. Such a coating makes it possible for soot to burn at a relatively low temperature. The particles which accumulate in the second filter component may thus substantially always undergo rapid combustion.

According to another preferred embodiment of the present invention, the particle filter comprises a supporting element adapted to serving as support for the second filter component when it is in a fitted state. The second filter component has thus to cover the outlet apertures of the first ducts and the outlet apertures of the second ducts. The second filter component has therefore to abut with relatively great pressure against the outlet apertures so that no exhaust gases from any outlet aperture are led out at the side of the second filter component. Cases where it takes the form of a flexible fibre mat usually entail the second filter component being braced by at least one supporting element. The supporting element may comprise a rigid unit with a structure which has holes running through it for throughflow of exhaust gases which pass through the second filter component. Such a supporting element may have a network structure, a grid structure or a honeycomb structure.

According to another preferred embodiment of the present invention, the first filter component comprises a body made of porous material. In this case the wall element will have a porous structure with passages which extend between the first duct and the second duct. The passages will be dimensioned to allow exhaust gases, but not particles, to pass between the ducts. The porous material may be ceramic material or sintered material. The first filter component comprises with advantage a plurality of first ducts and a plurality of second ducts which have a parallel extent between a first end surface of the first filter component and a second end surface of the first filter component. The second filter component is here situated adjacent to the second end surface at a location such that it extends across all the outlet apertures in the second end surface.

### BRIEF DESCRIPTION OF THE DRAWINGS

A preferred embodiment of the invention is described below by way of example with reference to the attached drawings, in which:
- Fig. 1: depicts a particle filter according to an embodiment of the present invention,
- Fig. 2: is a sectional view of part of the particle filter in Fig. 1 in an initial operating situation and
- Fig. 3: is a corresponding sectional view of the particle filter in Fig. 1 in a subsequent operating situation.

### DETAILED DESCRIPTION OF A PREFERRED EMBODIMENT OF THE INVENTION

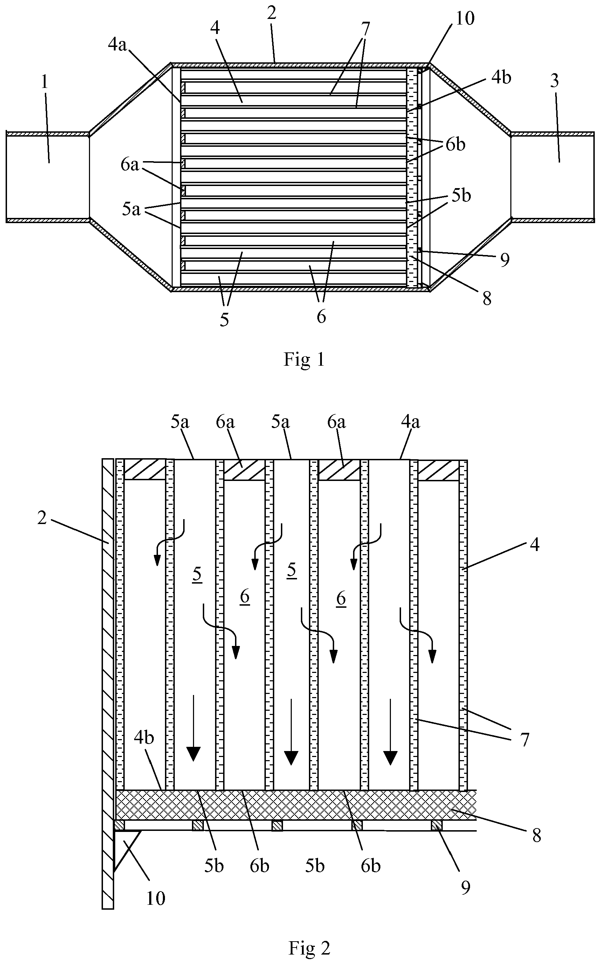

Fig. 1 depicts a particle filter situated in an exhaust system for a diesel engine. The exhaust system comprises an exhaust line 1 leading exhaust gases from the engine to a container 2 which surrounds the particle filter. After the exhaust gases have been cleaned of particles in the particle filter, they are led from the container 2 to a downstream exhaust line 3. The particle filter comprises a first filter component 4 in the form of a body which has a porous structure. The first filter component may consist of ceramic material or sintered material. The first filter component 4 contains a large number of parallel ducts. The parallel ducts extend between a first end surface 4a and a second end surface 4b of the first filter component 4. The ducts comprise first ducts 5 and second ducts 6. The first ducts 5 and the second ducts 6 are separated from one another by relatively thin sidewalls 7 made of the aforesaid porous material. The porous sidewalls 7 contain axial passages whose size is such that they allow exhaust gases, but not particles, to pass through. The first ducts 5 have inlet apertures 5a at the first end surface 4a whereby exhaust gases are received in the first filter component 4. The first ducts 5 have outlet apertures 5b at the second end surface 4b whereby exhaust gases are led out from the first filter component 4. The second ducts 6 are provided with stopping means 6a at the first end surface 4a to prevent the exhaust gases from being led into them there. The second ducts 6 are provided with outlet apertures 6b at the second end surface 4b whereby exhaust gases are led out from the first filter component 4.

A second filter component 8 is situated in contact with the second end surface 4b of the first filter component 4. The second filter component 8 is fitted at a location such that it extends across the whole of the second end surface 4b and therefore also across the outlet apertures 5b of the first ducts and the outlet apertures 6b of the second ducts. The second filter component 8 is composed of a fibre mat comprising fibres of heat-tolerant material. The material has to be able to tolerate at least a maximum exhaust temperature which may be of the order of 700°C. The heat-tolerant material may for example be silicon dioxide SiO₂. The second filter component 8 has the characteristic of allowing exhaust gases to pass through while at the same time intercepting particles. A supporting element 9 is provided on the side of the filter 8 which is not in contact with the second end surface 4b of the first filter component 4. The supporting element 9 comprises a structure which has holes running through it for throughflow of exhaust gases which have passed through the second filter component 8. The supporting element 9 may have a grid structure, network structure, honeycomb structure or the like. An annular fastening means 10 is adapted to keeping the supporting element 9 and the second filter component 8 at an intended fitting location in the container 2.

During operation of the diesel engine, exhaust gases are led through the exhaust system. When the exhaust gases encounter the container 2, they reach initially the first filter component 4 into which they are led via the inlet apertures 5a to the first ducts 5. There are then two possible flow paths for the exhaust gases to follow. A first flow path leads them through the whole of the first ducts 5 and out via their outlet apertures 5b. They are then led through the second filter component 8 in which particles accompanying them become attached close to the outlet apertures 5b of the first ducts. The exhaust gases thus cleaned of particles then move on in the exhaust system through the exhaust line 3. A second flow path leads the exhaust gases from the first ducts 5 via the axial passages in the wall element 7 to adjacent second ducts 6. The exhaust gases here pass through the axial passages in the wall element 7 but the accompanying particles become attached. The exhaust gases thus cleaned of particles are then led out from the second ducts 6 via their outlet apertures 6b. The exhaust gases are then led through the second filter component 8. As they will already have been cleaned of particles, no particles will become attached in the second filter component 8 close to the outlet apertures 6b of the second ducts. The exhaust gases then move on in the exhaust system through the exhaust line 3.

When the exhaust gases are led along the first flow path, particles become attached in the second filter component 8 in the region situated externally to the outlet apertures 5b of the first ducts. When the exhaust gases are led along the second flow path, the particles become attached to surfaces of the first ducts 5 close to the axial passages in the wall element 7. To maintain continuing good operation, the soot in the particles which have become attached in the aforesaid regions has to be burnt. This is achieved by applying a burner in the exhaust system at a location upstream of the particle filter. The purpose of the burner is, when necessary, to heat the exhaust gases to a temperature such that the soot bums in the particle filter. The soot in the particles normally ignites at a temperature of about 600°C. In most cases, however, it is difficult to guarantee such a high exhaust temperature even with a high-performance burner. The ignition temperature of the soot has therefore usually to be lowered. This may be done by converting the various types of nitrogen oxides NO_{X} present to nitrogen dioxide NO₂. There are substantially two methods for this. In a CRT (continuous regeneration trap) first method an oxidation catalyst is provided in the exhaust system at a location upstream of the particle filter. In this case the soot ignites in the particle filter at a significant lower temperature than 600°C. In a CSF (catalytic soot filter) second method the particle filter is coated with a suitable coating material so that the oxidation catalysis from NO_{X} to NO₂ takes place directly on the surfaces where the particles accumulate. Here again the soot ignites at a significantly lower temperature than 600°C. In this case suitable regions of the second filter component 8 may be provided with such coating material, which may be a thin layer of a noble metal. It is also possible by means of various substances added to the fuel to reach a lower ignition temperature of about 350°C in a particle filter.

The exhaust gases in the exhaust system take substantially whichever of the two flow paths through the particle filter presents the lower possible flow resistance. The total flow resistance of the first flow path is substantially determined by the flow resistance of the exhaust gases when they are led through the second filter component 8. The total flow resistance of the second flow path is substantially determined by the aggregate of the flow resistance of the exhaust gases when they are led through the wall element 7 and the flow resistance when they are led through the second filter component 8. Fig. 2 depicts an operating situation where a new first filter component 4 and a new second filter component 8 have been applied in the container 2. In this case the flow resistance for exhaust gases led through the second filter component 8 close to the outlet apertures 5b of the first duct and close to the outlet apertures 6b of the second duct will be similar. Exhaust gases led along the first flow path will additionally be subject to flow resistance through the wall element 7. In this case the exhaust gases led along the first flow path will thus have less flow resistance than those led along the second flow path. This means that a substantial portion of them will be led along the first flow path. The particles in the exhaust gases will therefore be mainly intercepted in the second filter component 8 in the regions close to the outlet apertures 5b of the first ducts.

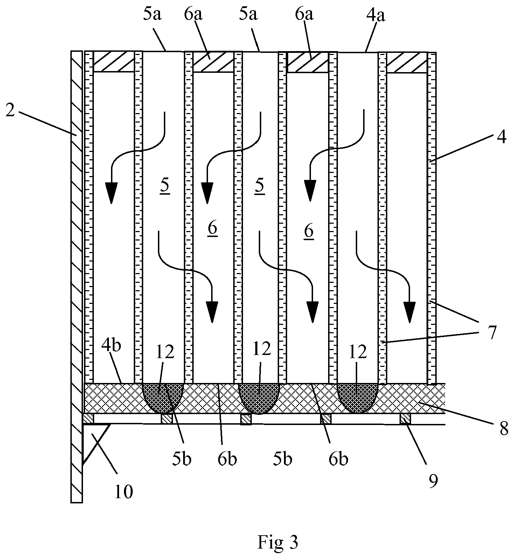

During operation, the soot will burn in any of the ways described above. However, not all of the material in the particles is combustible soot, so formations of ash inevitably develop over time in the second filter component 8 in the regions close to the outlet apertures 5b of the first ducts. Fig. 3 depicts such ash formations 12. Their presence causes the flow resistance of the exhaust gases through the second filter component 8 close to the outlet apertures 5b to increase progressively as said ash formations 12 grow. The flow resistance for the exhaust gases led along the first flow path therefore increases during operation. When the flow resistance along the first flow path increases, an increasing proportion of the exhaust gases will be led along the second flow path. When the ash formations 12 reach the size depicted in Fig. 3, they substantially constitute an impenetrable blocking surface close to the outlet apertures 5b. Substantially the whole exhaust flow is then led along the second flow path through the particle filter. The particles are then separated from the exhaust gases when they are led through the axial passages in the wall element 7. The axial passages through the wall element 7 thus also begin to be obstructed by ash..

When this happens, it is time to renovate the particle filter. The container 2 is removed and opened appropriately, followed by releasing the annular fastening means 10. This makes it possible to remove the supporting element 9 and the second filter component 8. Finally, the first filter component 4 is removed from the container 2. The second filter component 8, being not particularly expensive to procure, is scrapped. The first filter component 4, being significantly more expensive to procure, is renovated. The first filter component 4 will have ash formations on the sidewall surfaces in the first ducts 5. The second ducts 6 will be substantially clean of ash since the exhaust gases will already have been cleaned of particles by the time they reach them. The first ducts 5 have both an inlet aperture 5a and an outlet aperture 5b. This makes it easy to reach the first ducts and remove ash from them. The cleaning process may involve the ash being detached and removed from the first ducts by means of a powerful jet of suitable solvent. The renovated first filter component 4 is then put back in place in the container 2. A new second filter component 8 is applied against the second end surface 4b of the first filter component. The supporting element 9 is applied in contact with the second filter component 8 at an intended location before being locked firmly in fitting position by means of the annular fastening means 10. The particle filter will then be ready to be used again.

The present particle filter has several advantages over a conventional particle filter. As the first filter component 4 is used substantially only when the second filter component 8 is out of action, there will be a relatively long time before the particle filter needs renovating. This means that its renovation may take place at quite long intervals. As the first filter component 4 has first ducts 5 which are open at both ends, ash formations in them can be blown out in a relatively uncomplicated way. Such renovation causes relative little wear of the surfaces of the first filter component 4. Finally, the fibres in the second filter component 8 may be coated with suitable coating material, in the form of a noble metal, so that the oxidation catalysis from NO_{X} to NO₂ takes place directly on the surfaces where the particles accumulate, thereby lowering the combustion temperature of the soot.

The invention is in no way restricted to the embodiment described but may be varied freely within the scopes of the claims.

## Claims

1. A particle filter (1) for an exhaust system which leads exhaust gases out from a combustion engine, which filter comprises a first filter component (4) with a first end surface (4a) and a second end surface (4b), comprising at least one first duct (5) which has an inlet aperture (5a) whereby exhaust gases are led into the first filter component (4), and at least one second duct (6) which is provided with stopping means 6a at the first end surface 4a to prevent the exhaust gases from being led into them there and has an outlet aperture (6b) at the second end surface (4b),
whereby exhaust gases are led out from the first filter component (4), and a wall element (7) which separates the first duct (5) and the second duct (6) and which contains passages dimensioned to allow exhaust gases, but not particles, to pass through, **characterised in that** the first duct (5) comprises also an outlet aperture (5b) at the second end surface (4b), whereby exhaust gases are led out from the first filter component (4), and that the particle filter comprises a second filter component (8) so located that it extends across the outlet aperture (5b) of the first duct and the outlet aperture (6b) of the second duct of the first filter component (4), this second filter component (8) being dimensioned to allow exhaust gases to pass through, but not particles, and be led out from the outlet apertures (5b, 6b) of the first filter component.

2. A particle filter according to claim 1, **characterised in that** it comprises fastening means (10) by which the second filter component (8) can be fitted releasably at said location.

3. A particle filter according to claim 1 or 2, **characterised in that** the second filter component (8) comprises a mat made of fibre material.

4. A particle filter according to claim 3, **characterised in that** said fibre mat comprises fibres of silicon dioxide.

5. A particle filter according to claim 3 or 4, **characterised in that** said fibre mat has in the regions where the particles accumulate a coating of material which results in oxidation catalysis whereby nitrogen dioxide is formed.

6. A particle filter according to any one of claims 3 to 5, **characterised in that** it comprises a supporting element (9) adapted to serving as support for the second filter component (8) when in a fitted state.

7. A particle filter according to claim 6, **characterised in that** the supporting element (9) takes the form of a rigid unit with a structure which has holes running through it for throughflow of exhaust gases which pass through the second filter component (8).

8. A particle filter according to any one of the foregoing claims, **characterised in that** the first filter component (4) contains a plurality of first ducts (5) and a plurality of second ducts (6) which have a parallel extent between a first end surface (4a) and a second end surface (4b) of the first filter component (4).

9. A particle filter according to any one of the foregoing claims, **characterised in that** the first filter component (4) comprises a body made of porous material.

10. A particle filter according to any one of the foregoing claims, **characterised in that** the first filter component (4) consists of a body made of ceramic material or sintered material.

## Patentansprüche

1. Partikelfilter (1) für ein Abgassystem, welches Abgase aus einem Verbrennungsmotor führt, wobei der Filter eine erste Filterkomponente (4) mit einer ersten Endfläche (4a) und einer zweiten Endfläche (4b) umfasst, wobei der Partikelfilter mindestens eine erste Leitung (5) umfasst, welche eine erste Eingangsöffnung (5a) aufweist, wodurch Abgase in die erste Filterkomponente (4) geführt werden, und mindesten eine zweite Leitung (6), welche mit Anschlagmitteln (6a) an der ersten Endfläche (4a) bereitgestellt ist, um zu verhindern, dass Abgase dort hinein geführt werden, und welcher eine Ausgangsöffnung (6b) an der zweiten Endfläche (4b) hat, wobei Abgase aus der ersten Filterkomponente (4) herausgeführt werden, und welcher ein Wandelement (7) umfasst, welches die erste Leitung (5) und die zweite Leitung (6) voneinander trennt, und welches eine Passage umfasst, die dimensioniert ist, um das Passieren von Abgasen, aber nicht von Partikeln, zu erlauben, dadurch gekennzeichnet, dass die erste Leitung (5) ferner eine Ausgangsöffnung (5b) an der zweiten Endfläche (4b) umfasst, wobei Abgase aus der ersten Filterkomponente (4) geführt werden, und dass der Partikelfilter eine zweite Filterkomponente (8) umfasst, die derart positioniert ist, dass sie sich über der Ausgangsöffnung (5b) der ersten Leitung und der Ausgangsöffnung (6b) der zweiten Leitung der ersten Filterkomponente (4) erstreckt, wobei diese zweite Filterkomponente (6) dimensioniert ist, Abgasen, aber nicht Partikeln, das Passieren durch sie zu erlauben und aus den Ausgangsöffnungen (5b, 6b) der ersten Filterkomponente herausgeführt zu werden.

2. Partikelfilter nach Anspruch 1, **dadurch gekennzeichnet, dass** er Befestigungsmittel (10) umfasst, durch welche die zweite Filterkomponente (8) lösbar an der Position montiert werden kann.

3. Partikelfilter nach Anspruch 1 oder 2, **dadurch gekennzeichnet, dass** die zweite Filterkomponente (8) eine Matte hergestellt aus Fasermaterial umfasst.

4. Partikelfilter nach Anspruch 3, **dadurch gekennzeichnet, dass** die Fasermatte Fasern aus Siliciumdioxid umfasst.

5. Partikelfilter nach Anspruch 3 oder 4, **dadurch gekennzeichnet, dass** besagte Fasermatte in den Regionen, wo sich die Partikel akkumulieren, eine Materialbeschichtung aufweist, welche in eine Oxidations-Katalyse resultiert, bei welcher Stickstoffdioxid gebildet wird.

6. Partikelfilter nach einem der Ansprüche 3 bis 5, **dadurch gekennzeichnet, dass** er ein Stützelement (9) umfasst, welches geeignet ist, in einem montierten Zustand als Stütze für die zweite Filterkomponente (8) zu dienen.

7. Partikelfilter nach Anspruch 6, **dadurch gekennzeichnet, dass** das Stützelement (9) die Form einer starren Einheit mit einer Struktur annimmt, welche für einen Durchfluss von Abgasen, welche durch die zweite Filterkomponente (8) passieren, durch sie verlaufende Löcher hat.

8. Partikelfilter nach einem der vorhergehenden Ansprüche, **dadurch gekennzeichnet, dass** die erste Filterkomponente (4) eine Mehrzahl an ersten Leitungen (5) und eine Mehrzahl an zweiten Leitungen (6) umfasst, welche eine parallele Erstreckung zwischen einer ersten Endfläche (4a) und einer zweiten Endfläche (4b) der ersten Filterkomponente (4) aufweisen.

9. Partikelfilter nach einem der vorhergehenden Ansprüche, **dadurch gekennzeichnet, dass** die erste Filterkomponenten (4) einen aus einem porösen Material hergestellten Körper umfasst.

10. Partikelfilter nach einem der vorhergehenden Ansprüche, **dadurch gekennzeichnet, dass** die erste Filterkomponente (4) aus einem aus einem keramischen Material oder aus einem gesinterten Material hergestellten Körper besteht.

## Revendications

1. Filtre à particules (1) pour un système d'échappement qui évacue les gaz d'échappement d'un moteur à combustion, lequel filtre comprend un premier composant de filtre (4) ayant une première surface d'extrémité (4a) et une seconde surface d'extrémité (4b), comprenant au moins un premier conduit (5) qui présente une ouverture d'admission (5a) permettant l'admission des gaz d'échappement dans le premier composant de filtre (4), et au moins un second conduit (6) qui est pourvu de moyens d'arrêt (6a) au niveau de la première surface d'extrémité 4a pour empêcher les gaz d'échappement d'y pénétrer et qui présente une ouverture de sortie (6b) au niveau de la seconde surface d'extrémité (4b), par laquelle les gaz d'échappement sont évacués du premier composant de filtre (4), et un élément de paroi (7) qui sépare le premier conduit (5) et le second conduit (6) et qui contient des passages dimensionnés de façon à laisser passer les gaz d'échappement mais non pas les particules, **caractérisé en ce que** le premier conduit (5) comprend également une ouverture de sortie (5b) au niveau de la seconde surface d'extrémité (4b), par laquelle les gaz d'échappement sont évacués du premier composant de filtre (4), et **en ce que** le filtre à particules comprend un second composant de filtre (8) situé de manière à s'étendre à travers l'ouverture de sortie (5b) du premier conduit et l'ouverture de sortie (6b) du second conduit du premier composant de filtre (4), ce second composant de filtre (8) étant dimensionné pour permettre le passage des gaz d'échappement mais non pas des particules et leur évacuation par le biais des ouvertures de sortie (5b, 6b) du premier composant de filtre.

2. Filtre à particules selon la revendication 1, **caractérisé en ce qu'**il comprend des moyens de fixation (10) permettant la fixation amovible du second composant de filtre (8) audit emplacement.

3. Filtre à particules selon la revendication 1 ou 2, **caractérisé en ce que** le second composant de filtre (8) comprend une couche formée d'un matériau en fibres.

4. Filtre à particules selon la revendication 3, **caractérisé en ce que** ladite couche de fibres comprend des fibres de dioxyde de silicium.

5. Filtre à particules selon la revendication 3 ou 4, **caractérisé en ce que** ladite couche de fibres présente, dans les régions où s'accumulent les particules, un revêtement de matière qui provoque une catalyse d'oxydation, au niveau duquel du dioxyde d'azote est formé.

6. Filtre à particules selon l'une quelconque des revendications 3 à 5, **caractérisé en ce qu'**il comprend un élément de support (9) adapté pour servir de support au second composant de filtre (8) à l'état monté.

7. Filtre à particules selon la revendication 6, **caractérisé en ce que** l'élément de support (9) prend la forme d'une unité rigide dotée d'une structure comportant des orifices ménagés à travers celle-ci pour le passage des gaz d'échappement à travers le second composant de filtre (8).

8. Filtre à particules selon l'une quelconque des revendications précédentes, **caractérisé en ce que** le premier composant de filtre (4) contient une pluralité de premiers conduits (5) et une pluralité de seconds conduits (6) qui s'étendent parallèlement entre une première surface d'extrémité (4a) et une seconde surface d'extrémité (4b) du premier composant de filtre (4).

9. Filtre à particules selon l'une quelconque des revendications précédentes, **caractérisé en ce que** le premier composant de filtre (4) comprend un corps en matériau poreux.

10. Filtre à particules selon l'une quelconque des revendications précédentes, **caractérisé en ce que** le premier composant de filtre (4) consiste en un corps en matériau céramique ou en matériau fritté.
